# EUROPÄISCHE PATENTSCHRIFT

(11) **EP 1 637 751 B1**
(45) Veröffentlichungstag und Bekanntmachung des Hinweises auf die Patenterteilung: **02.03.2011**
(21) Anmeldenummer: 05014358.5
(22) Anmeldetag: 01.07.2005
(51) Int. Cl.: F16C 11/06, B60G 7/00, B62D 7/16

(54) **Kugelgelenk für Kraftfahrzeuge**
ball joint for motor vehicle
articulation à rotule pour véhicule automobile

(30) Priorität: 17.09.2004 DE 102004045099
(43) Veröffentlichungstag der Anmeldung: 22.03.2006
(73) Patentinhaber: AUDI AG, 85045 Ingolstadt (DE)
(72) Erfinder: Bschierl, Christian, 85095 Denkendorf (DE); Lux, Ulrich, 85591 Vaterstetten (DE); Swierstra, Nanne, 85092 Kösching (DE)

(56) Entgegenhaltungen:
- DE-A1- 1 455 590
- DE-A1- 3 339 523
- DE-A1- 3 705 847
- DE-A1- 19 525 084
- GB-A- 949 033

## Beschreibung

Die Erfindung betrifft ein Kugelgelenk für Kraftfahrzeuge bestehend aus einer von einem Gehäuse umfassten Gelenkkugel mit integralem Kugelzapfen, der mittels einer Schraubverbindung mit einem Fahrzeugteil lösbar verbunden ist.

Bei solchen z. B. aus der DE 37 05 847 A1 bekannten Kugelgelenken weist der kegelförmig ausgebildete Kugelzapfen an dem der Gelenkkugel abgewandten Ende ein als Außengewinde ausgebildetes Schraubgewinde auf, auf das eine Kronenmutter derart aufschraubbar ist, dass der Kugelzapfen und damit das Kugelgelenk in einem entsprechend konisch ausgebildeten Lagerauge eines Fahrzeugteiles, das z. B. ein Achslenker oder ein Achsträger verkörpert, durch axiales Verspannen festlegbar ist.

Es ist insbesondere bei zylindrischer Ausbildung des Kugelzapfens auch bekannt, anstelle einer axial wirkenden Schraubverbindung eine radial wirkende Klemmverbindung zwischen Fahrzeugteil und Kugelzapfen mit einer radial angreifenden Schraube oder ähnlichem zu verwenden.

Schließlich zeigt die gattungsbildende DE 195 25 084 A1 ein axial mit einem Radträger verspanntes Kugelgelenk für Hochlenkerachsen von Kraftfahrzeugen, dessen Kugelzapfen einen durchmessermäßig erweiterten Fuß aufweist, der formschlüssig in einer Vertiefung des oberen Endes des Radträgers aufsitzt.

Dem Verspannen des gattungsgemäßen Kugelgelenks dient eine mit Ihrem Schraubenkopf am Radträger sich abstützende Dehnschraube, die in eine Zapfen und Kugel axial teilweise durchsetzende Sacklochbohrung eingreift, welche nur in einem dem geschlossenen Ende des Kugelgelenks zugewandten Teilbereich mit einem Gewinde versehen ist.

Wie die Erfahrung gezeigt hat, ist der Raumbedarf solcher Befestigungen der notwendigen Kugelgelenke in axialer beziehungsweise in radialer Richtung groß, was gerade wegen der bestehenden Bauraumzwänge im Bereich der Fahrzeuglenkung ungünstig ist.

Der Erfindung liegt daher die Aufgabe zu Grunde, hier durch eine neue raumsparende Montage und Demontage freundliche Ausbildung einer solchen Befestigung Abhilfe zu schaffen.

Diese Aufgabe ist durch die Merkmale des Patentanspruchs 1 gelöst.
Weitere Merkmale der Erfindung ergeben sich aus den Unteransprüchen.

Die erfindungsgemäße Ausbildung des neuen Kugelgelenks weist signifikante Vorteile auf. Durch die Ausbildung der Schraubverbindung als Kugelzapfen und Gelenkkugel zumindest teilweise axial durchsetzende Schraubverbindung und die erfindungsgemäß angeordneten, frei zugängigen Schlüsselangriffsflächen am Kugelzapfen ist eine größe Schraubendehnlänge als bisher erzielbar bei gleichzeitiger Verringerung des Raumbedarfes des Kugelgelenkes in axialer Richtung. Dies gilt auch gegenüber der vorstehend genannten radial wirkenden Klemmverbindung. Die erfindungsgemäße Ausbildung führt auch zu einem besseren Schraubensitz als bisher und zu einer besseren Einstellung der Spannkräfte. Die nunmehr erzielbare große Schraubenvorspannkraft verursacht im Kugelzapfen Druckeigenspannungen, die - vor allem im Übergangsbereich von Kugel zu Konus - die Festigkeit des Kugelzapfens positiv beeinflussen.

Ein weiterer Vorteil ist darin zu sehen, dass die neue Befestigung keine Änderung der notwendigen Abdichtung zwischen Kugelzapfen und Gehäuse der Gelenkkugel mittels Dichtungsmanschetten erfordert, vielmehr wirken sich die größeren Standzeiten der neuen Befestigung auch auf die Lebensdauer der Abdichtung positiv aus.

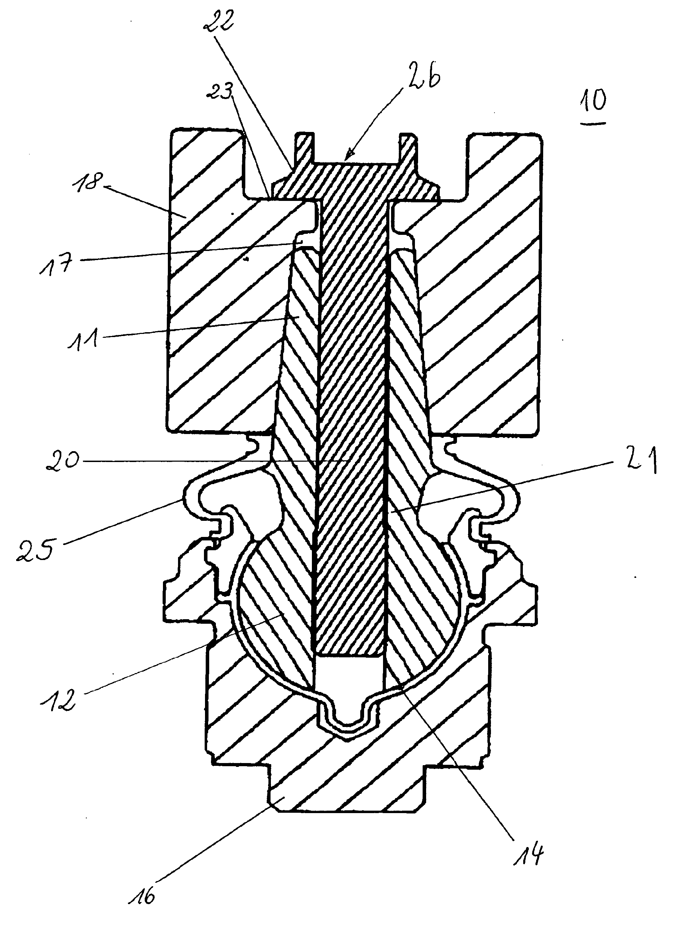

Die Erfindung ist nachfolgend anhand eines in der Zeichnung dargestellten Ausführungsbeispiels beschrieben.

Bei dem hier insgesamt mit der Bezugsziffer 10 bezeichneten Kugelgelenk nach dem Ausführungsbeispiel ist eine mit einem Kugelzapfen 11 einstückig verbundene Gelenkkugel 12 mittels einer Gelenkschale 14 aus einem elastischen Werkstoff in einem Gehäuse 16 des Kugelgelenkes gelagert. Der Kugelzapfen 11 greift mittels seines konusförmig ausgebildeten Schaftteiles in ein dazu korrespondierend ausgebildetes Lagerauge 17 innerhalb eines Fahrzeugteiles 18 ein. Das Fahrzeugteil ist beispielsweise als Achslenker oder als Achsträger eines nicht dargestellten Kraftfahrzeuges ausgebildet.

Über eine Dehnschraube 20, die Kugelzapfen und Gelenkkugel axial zumindest teilweise durchsetzt, sind diese mit dem Fahrzeugteil 18 fest verspannt. Hierzu greift die Dehnschraube 20 mit ihrem Außengewinde in ein in einer Kugelzapfen und Gelenkkugel axial und zentrisch durchsetzende Bohrung 21 befindliches Innengewinde ein und stützt sich mit ihrem Schraubkopf 22 an einer geeignet ausgebildeten planen Lagerfläche 23 des Fahrzeugteiles 18 ab.

Zwischen Fahrzeugteil 18 und Gehäuse des Kugelgelenkes 16 befindet sich eine hier nicht näher beschriebene Abdichtung in Form einer Manschette 25.

Die Bohrung 21 kann auch als Sackloch oder als eine mit einer Kappe verschlossene durchgängige Bohrung ausgeführt werden. Zwischen Manschette 25 und Kugelzapfen kann an dessen konischer Außenmantelfläche eine Schlüsselangriffsfläche als Montage- bzw. Demontagehilfe angebracht sein, die nach Abnahme der Dichtmanschette frei zugängig ist. Die dargestellte Dehnschraube 20 kann für deren Betätigung mit einem Innen- oder Außenangriff 26 ausgebildet sein; an Stelle einer Flanschschraube kann auch jede andere Schraubenausführung verwendet werden, was auch für die Ausbildung der Lagerfläche 23 des Fahrzeugteiles 18 gilt.

### B E Z U G S Z E I C H E N L I S T E

- 10: Kugelgelenk
- 11: Kugelzapfen
- 12: Gelenkkugel
- 14: Gelenkschale
- 16: Gehäuse
- 17: Lagerauge
- 18: Fahrzeugteil
- 20: Dehnschraube
- 21: Bohrung
- 22: Schraubkopf
- 23: Lagerfläche
- 25: Manschette
- 26: Außenangriff

## Patentansprüche

1. Kugelgelenk (10) für Kraftfahrzeuge bestehend aus einer von einem Gehäuse (16) umfassten Gelenkkugel (12) mit integralem Kugelzapfen (11), der mittels einer Schraubverbindung mit einem Fahrzeugteil (18) lösbar verbunden ist, wobei die Schraubverbindung eine Kugelzapfen (11) und Gelenkkugel (12) axial zumindest teilweise durchsetzende, in ein Innengewinde des Kugelzapfens (11) und der Gelenkkugel (12) eingreifende Dehnschraube (20) umfasst, deren Schraubenkopfauflage (22, 23) durch das Fahrzeugteil (18) gebildet ist, und zwischen Gehäuse (16) und Fahrzeugteil (18) eine Abdichtung in Form einer Manschette (25) angeordnet ist, **dadurch gekennzeichnet, dass** der Kugelzapfen (12) an seiner der Manschette (25) zugewandten Außenmantelfläche Montage- bzw. Demontagegehilfen bildende Schlüsselangriffsflächen aufweist.

2. Kugelzapfen nach Anspruch 1 **dadurch gekennzeichnet, dass** das Innengewinde der Schraubverbindung Teil der Mantelfläche einer Gelenkkugel (12) und Kugelzapfen (11) axial durchsetzenden Durchgangsbohrung (21) ist.

3. Kugelgelenk nach den Ansprüchen 1 und 2 **dadurch gekennzeichnet, dass** das Innengewinde der Schraubverbindung Teil der Mantelfläche einer Gelenkkugel und Kugelzapfen axial durchsetzenden Sackbohrung ist.

4. Kugelgelenk nach den Ansprüchen 1 bis 3, **dadurch gekennzeichnet, dass** der Kugelzapfen (11) eine konische oder eine zylindrische Außenmantelfläche aufweist.

## Claims

1. Ball joint (10) for motor vehicles, composed of a joint ball (12) which is encompassed by a housing (16) and has an integral ball pin (11) which is detachably connected by means of a screw connection to a vehicle part (18), with the screw connection comprising an expansion bolt (20) which extends axially at least partially through the ball pin (11) and joint ball (12) and engages into an internal thread of the ball pin (11) and of the joint ball (12), the screw head support (22, 23) of which expansion bolt (20) is formed by the vehicle part (18), and with a seal in the form of a sleeve (25) being arranged between the housing (16) and vehicle part (18), **characterized in that** the ball pin (11), on its outer lateral surface facing toward the sleeve (25), has wrench engagement surfaces which form assembly and disassembly aids.

2. Ball joint according to Claim 1, **characterized in that** the internal thread of the screw connection is part of the lateral surface of a through bore (21) which extends axially through the joint ball (12) and ball pin (11).

3. Ball joint according to Claims 1 and 2, **characterized in that** the internal thread of the screw connection is part of the lateral surface of a blind bore which extends axially through the joint ball and ball pin.

4. Ball joint according to Claims 1 to 3, **characterized in that** the ball pin (11) has a conical or cylindrical outer lateral surface.

## Revendications

1. Articulation à rotule (10) pour véhicules automobiles, constituée d'une rotule d'articulation (12) entourée par un boîtier (16), avec un tourillon sphérique intégral (11), qui est connecté de manière amovible à une partie du véhicule (18) au moyen d'une connexion vissée, la connexion vissée comprenant une vis d'extension (20) traversant axialement au moins en partie le tourillon sphérique (11) et la rotule d'articulation (12), venant en prise dans un filetage intérieur du tourillon sphérique (11) et de la rotule d'articulation (12), dont l'appui de tête de vis (22, 23) est formé par la partie du véhicule (18), un joint d'étanchéité en forme de manchon (25) étant disposé entre le boîtier (16) et la partie du véhicule (18), **caractérisée en ce que** le tourillon sphérique (11) présente, sur sa surface d'enveloppe extérieure tournée vers le manchon (25), des surfaces d'engagement de clé formant des aides au montage et au démontage.

2. Articulation à rotule selon la revendication 1, **caractérisé en ce que** le filetage intérieur de la connexion vissée fait partie de la surface d'enveloppe d'un alésage traversant (21) traversant axialement la rotule d'articulation (12) et le tourillon sphérique (11).

3. Articulation à rotule selon les revendications 1 et 2, **caractérisée en ce que** le filetage intérieur de la connexion vissée fait partie de la surface d'enveloppe d'un alésage borgne traversant axialement la rotule d'articulation et le tourillon sphérique.

4. Articulation à rotule selon les revendications 1 à 3, **caractérisée en ce que** le tourillon sphérique (11) présente une surface d'enveloppe extérieure conique ou cylindrique.
